# EUROPÄISCHE PATENTSCHRIFT

(11) **EP 3 736 232 B1**
(45) Veröffentlichungstag und Bekanntmachung des Hinweises auf die Patenterteilung: **22.06.2022**
(21) Anmeldenummer: 20173953.9
(22) Anmeldetag: 11.05.2020
(51) Int. Cl.: B65G 47/66, B65G 47/84, B67C 7/00, B65G 21/10

(54) **VORRICHTUNG ZUM ZUFÜHREN VON BEHÄLTERN ZU EINER BEHÄLTERBEHANDLUNGSVORRICHTUNG UND ABFÜLLANLAGE**
DEVICE FOR FEEDING CONTAINERS TO A CONTAINER PROCESSING DEVICE AND FILLING SYSTEM
DISPOSITIF D'AMENÉE DE RÉCIPIENTS VERS UN DISPOSITIF DE TRAITEMENT DE RÉCIPIENTS ET INSTALLATION DE REMPLISSAGE

(30) Priorität: 10.05.2019 DE 102019112293
(43) Veröffentlichungstag der Anmeldung: 11.11.2020
(73) Patentinhaber: KRONES AG, 93073 Neutraubling (DE)
(72) Erfinder: Landler, Bruno, 93073 Neutraubling (DE); Schmid, Manfred, 93073 Neutraubling (DE)
(74) Vertreter: Nordmeyer, Philipp Werner

(56) Entgegenhaltungen:
- DE-A1-102015 106 788
- US-A- 3 944 058
- US-A1- 2011 127 143
- US-A1- 2011 286 825
- US-A1- 2013 313 081
- US-A1- 2016 145 090

## Beschreibung

### Technisches Gebiet

Die vorliegende Erfindung betrifft eine Vorrichtung zum Zuführen von Behältern zu einer Behälterbehandlungsvorrichtung, beispielsweise zu einer Behälterfüllvorrichtung zum Befüllen von Behältern wie beispielsweise Dosen mit einem flüssigen Füllprodukt, sowie eine Abfüllanlage, beispielsweise eine Abfüllanlage zum Befüllen von Dosen.

### Stand der Technik

Es ist bekannt, Behälter in verschiedenen Behälterbehandlungsvorrichtungen zu behandeln. Solche Behälterbehandlungsvorrichtungen können beispielsweise in Form von Füllvorrichtungen zum Befüllen der Behälter mit einem fließfähigen Füllprodukt, Verschließvorrichtungen zum Verschließen der befüllten Behälter, Etikettiervorrichtungen oder Vorrichtungen zum Bedrucken der Behälter ausgebildet sein.

Insbesondere im Falle von Füllvorrichtungen weisen diese oft ein um eine Rotationsachse rotierendes Füllerkarussell auf, an dessen Umfang eine Mehrzahl von Füllorganen angeordnet ist, welche die eigentliche Befüllung der Behälter übernehmen.

Zum Zuführen der zu behandelnden Behälter an die jeweilige Behälterbehandlungsvorrichtung ist es bekannt, eine Vorrichtung zum Zuführen der Behälter vorzusehen. Diese Vorrichtung kann eine Führung aufweisen, welche ein Höhenniveau der zuzuführenden Behälter vorgibt, wobei dieses Höhenniveau an ein Übernahmehöhenniveau einer die Behälter übernehmenden Führung der Behälterbehandlungsmaschine angepasst ist.

Während des Betriebs der Behälterbehandlungsvorrichtung, insbesondere wenn diese als Füllvorrichtung ausgebildet ist, kommt es typisch zu einer Veränderung der Temperatur - meist einer Erwärmung - der Behälterbehandlungsvorrichtung, was in einer Wärmeausdehnung der Behälterbehandlungsvorrichtung resultiert.

Zur Kompensation dieser Wärmeausdehnung ist es bei Rundläufer- Füllvorrichtungen, wie beispielweise aus der DE 10 2013 110 161 B4, bekannt, eine radiale Verschiebung eines Transportsterns relativ zur Füllvorrichtung vorzunehmen. Dadurch lässt sich eine durch die Wärmeausdehnung erfolgte Vergrößerung des Durchmessers der Füllvorrichtung ausgleichen.

Aus der DE 10 2013 110 161 B4 ist zu entnehmen, dass die Behälter-Führung des Zulaufsterns und die Behälter-Führung der Füllvorrichtung auf unterschiedlichen Höhenniveaus angeordnet sind, wobei der Unterschied durch ein Anheben beziehungsweise Absenken der Behälter in Richtung der Rotationsachse von der Führung des Zulaufsterns an die Führung der Füllvorrichtung übergeben werden. Derartige Hebe- oder Absenkungsvorrichtungen erhöhen jedoch die Komplexität und das Gewicht derartiger Anlagen.

Um zu vermeiden, dass die zugeführten Behälter mit der Führung der erwärmten Füllvorrichtung kollidieren, ist es bekannt, das Führungshöhenniveau am Zulaufstern um einen vorgegebenen Betrag höher anzusetzen, als das vorgegebene Übernahmehöhenniveau der Führung der Füllvorrichtung. Bei einer Erwärmung der Füllvorrichtung verringert sich die Differenz zwischen dem Führungshöhenniveau und dem Übernahmehöhenniveau entsprechend. Um eine Kollision der Behälter mit der Führung der Vorrichtung in jedem Falle zu vermeiden, ist das Führungshöhenniveau derart höher vorzusehen, dass während des Betriebs stets ein gewisser Resthöhenniveauunterschied vorhanden ist. Die Behälter kippen mithin während des Betriebs stets von der Führung des Zulaufsterns auf die Führung der Füllvorrichtung. Um Schäden an den Behältern durch dieses Kippen zu vermeiden, ist der Durchsatz der Behälter, mit anderen Worten die Geschwindigkeit, mit welcher die Behälter von der Führung des Zulaufsterns an die Führung der Füllvorrichtung übergeben werden, zu beschränken, sodass derartige Anlagen einen vergleichsweise geringen maximalen Durchsatz aufweisen.

Die DE 10 2015 106 788 A1 beschreibt eine Transportvorrichtung zur Beförderung von stehenden Behältern mit einer Behälterhebevorrichtung. Die US 3,944,058 A beschreibt ein Flaschentransportsystem mit einem höhenverstellbaren Bandförderer. Die US 2016/0145090 A1 beschreibt eine Behältertransportvorrichtung. Die US 2011/0286825 A1 beschreibt eine Vorrichtung zum Anheben einer Gruppe von Behältern. Die US 2011/0127143 A1 beschreibt eine Behältertransportvorrichtung mit einer einstellbaren seitlichen Führung. Die US 2013/0313081 A1 beschreibt eine Behälterbehandlungsvorrichtung mit beweglichen Transportsternen.

### Darstellung der Erfindung

Ausgehend von dem bekannten Stand der Technik ist es eine Aufgabe der vorliegenden Erfindung, eine verbesserte Vorrichtung zum Zuführen von Behältern zu einer Behälterbehandlungsvorrichtung, insbesondere zu einer Behälterfüllvorrichtung zum Befüllen von Behältern mit einem flüssigen Füllprodukt, sowie eine Abfüllanlage, insbesondere eine Abfüllanlage zum Befüllen von Dosen, bereitzustellen.

Die Aufgabe wird durch eine Vorrichtung zum Zuführen von Behältern zu einer Behälterbehandlungsvorrichtung, bevorzugt zu einer Behälterfüllvorrichtung zum Befüllen von Behältern mit einem flüssigen Füllprodukt, bevorzugt zum Zuführen und Behandeln von Dosen, mit den Merkmalen des Anspruchs 1 gelöst. Vorteilhafte Weiterbildungen ergeben sich aus den Unteransprüchen, der Beschreibung und den Figuren.

Entsprechend wird eine Vorrichtung zum Zuführen von Behältern zu einer Behälterbehandlungsvorrichtung, bevorzugt zu einer Behälterfüllvorrichtung zum Befüllen von Behältern mit einem flüssigen Füllprodukt, vorgeschlagen, umfassend eine auf einem vorgegebenen Führungshöhenniveau angeordnete Führung zum Führen eines Behälters an seinem Behälterboden, wobei die Führung einen Übergabeabschnitt zum Übergeben des Behälters an eine Übernahmevorrichtung der Behälterbehandlungsvorrichtung aufweist. Erfindungsgemäß ist der Übergabeabschnitt höhenverstellbar.

Dadurch, dass der Übergabeabschnitt höhenverstellbar ist, kann dieser an ein Übernahmehöhenniveau einer Führung oder Übernahmevorrichtung der Behälterbehandlungsvorrichtung angepasst beziehungsweise angeglichen werden. Die Behälter können so zumindest am Ende des Übergabeabschnitts im Wesentlichen das Übernahmehöhenniveau aufweisen, so dass sie ohne oder nur mit geringem Höhenversatz zwischen dem Übergabeabschnitt und der Übernahmevorrichtung beziehungsweise dessen Führung transferiert werden können.

Somit ist es möglich, den Durchsatz einer die Vorrichtung aufweisenden Anlage im Vergleich zu herkömmlichen Anlagen hoch zu halten beziehungsweise diese ungeachtet der Wärmeausdehnung der Behälterbehandlungsvorrichtung stets bei einem maximalen Durchsatz beziehungsweise Nenndurchsatz zu betreiben, ohne Beschädigungen an den Behältern beim Transferieren der Behälter von der Vorrichtung zur Behälterbehandlungsvorrichtung hinnehmen zu müssen. Mithin kann dadurch ein hoher oder gar maximaler Durchsatz der Anlage erzielt werden, ohne eine aufwendige, komplexe und schwere Hebe- und Absenkvorrichtung vorsehen zu müssen.

Entsprechend lassen sich bei hohem Durchsatz im Vergleich zu herkömmlichen Anlagen, welche einen ähnlich hohen Durchsatz aufweisen, der Aufbau der Anlage vereinfachen, sowie die Fertigungskosten und insbesondere die Betriebskosten reduzieren.

Gemäß einer bevorzugen Ausführungsform ist der Übergabeabschnitt derart ausgebildet, dass bei Einstellung des Übergabeabschnitts auf ein von dem Führungshöhenniveau abweichendes Höhenniveau sich der Übergabeabschnitt in Transportrichtung gesehen von dem Führungshöhenniveau stetig auf das eingestellte Höhenniveau des Übergabeabschnitts verändert. Mit anderen Worten weist der Übergabeabschnitt in Transportrichtung gesehen einen Anfang, welcher sich stets auf dem Führungshöhenniveau befindet, und ein Ende, welches das eingestellte Höhenniveau aufweist, auf. Der Bereich zwischen dem Anfang und dem Ende verändert sich dabei vom Führungshöhenniveau stetig auf das eingestellte Höhenniveau. Dadurch kann verhindert werden, dass die Behälter während des Überführens entlang des Übergabeabschnitts aufgrund einer Unstetigkeit im Verlauf der Führung hängen bleiben, verkanten oder sich verklemmen.

Vorzugsweise ist der Übergabeabschnitt elastisch ausgebildet, wobei der Übergabeabschnitt bevorzugt in Form eines elastischen Federelements, besonders bevorzugt eines elastischen Federblechs ausgebildet ist, und/oder der Übergabeabschnitt eine Ausnehmung, bevorzugt eine längliche, sich in Transportrichtung erstreckende Ausnehmung zum Ausbilden des elastischen Federelements aufweist, wobei die Ausnehmung bevorzugt U-förmig ausgebildet ist. Für einen derartig ausgebildeten Übergabeabschnitt kann im Wesentlichen auf zusätzliche Anbauteile zur Bereitstellung des elastischen Übergabeabschnitts verzichtet werden.

Insbesondere kann es vorteilhaft sein, wenn der Übergabeabschnitt einstückig mit der Führung ausgebildet ist. In Versuchen hat sich hierbei als besonders vorteilhaft herausgestellt, wenn der Übergabeabschnitt durch die längliche Ausnehmung in der Führung ausgebildet ist, wobei die Ausnehmung derart ausgebildet ist, dass eine Dicke des Materials des Übergabeabschnitts im Vergleich zur Dicke der Führung gering ist, bevorzugt mit einem Verhältnis kleiner gleich 1 zu 2, bevorzugt 1 zu 3, 1 zu 4, 1 zu 5, 1 zu 6, 1 zu 7, 1 zu 8, 1 zu 9, und besonders bevorzugt 1 zu 10.

Gemäß einer weiteren Ausführungsform ist eine Einstellvorrichtung zum Einstellen des Höhenniveaus des Übergabeabschnitts vorgesehen, wobei die Einstellvorrichtung bevorzugt unterhalb des Übergabeabschnitts angeordnet ist. Durch die Einstellvorrichtung kann das Höhenniveau exakt vorgegeben beziehungsweise eingestellt werden.

Vorzugsweise umfasst die Einstellvorrichtung einen Hubantrieb, bevorzugt einen Stellmotor oder Schrittmotor. Der Hubantrieb ist dabei bevorzugt derart anordnet, dass ein Hub des Hubantriebs eine Veränderung des Höhenniveaus bewirkt. Vorzugsweise entspricht der Betrag des Hubes dem Betrag der Veränderung des Höhenniveaus. Der Hubantrieb kann hierzu vorteilhafterweise unterhalb des Übergabeabschnitts, bevorzugt unterhalb eines Endes des Übergabeabschnitts, angeordnet sein.

Um ein Übernahmehöhenniveau einer die Behälter übernehmenden Führung der Behälterbehandlungsmaschine, an welche das Höhenniveau des Übergabeabschnitts angeglichen werden soll, zu erfassen, ist gemäß der Erfindung ein Sensor zum Erfassen eines Übernahmehöhenniveaus einer die Behälter übernehmende Führung der Behälterbehandlungsmaschine vorgesehen, wobei der Sensor bevorzugt mit der Einstellvorrichtung verbunden ist, wobei die Einstellvorrichtung bevorzugt basierend auf einem via des Sensors erfassten Wertes das Höhenniveau des Übergabeabschnitts einstellt, bevorzugt derart, dass das Höhenniveau im Wesentlichen dem Übernahmehöhenniveau entspricht.

Gemäß einer weiteren Ausführungsform ist der Sensor ein optisch messender Sensor, ein mechanisch abtastender Sensor und/oder ein thermischer Sensor, wobei die Einstellvorrichtung bevorzugt eine Steuerung/Regelung aufweist, welche einen Vorgabewert für das Höhenniveau des Übergabeabschnitts basierend auf einem Eingangssignal des Sensors ermittelt.

Bevorzugt ist ein thermischer Sensor vorgesehen, wobei die Einstellvorrichtung bevorzugt eine Steuerung/Regelung aufweist, welche einen Vorgabewert für das Höhenniveau des Übergabeabschnitts basierend auf einem Eingangssignal des Sensors ermittelt und dann gemäß einer Zeitvorgabe kontinuierlich anpasst. Entsprechend kann durch die Kopplung an die verlaufende Zeit eine Anpassung des Höhenniveaus vorgenommen werden, ohne dass eine erneute Messung mit dem Sensor vorgenommen werden muss.

Bevorzugt ist der Sensor dazu eingerichtet, kontinuierlich Werte zu erfassen, bevorzugt zu regelmäßig beabstandeten Zeitpunkten beziehungsweise zu vorgegebenen Zeitintervallen oder auch unterbrechungsfrei, und die Einstellvorrichtung ist dazu eingerichtet, die Einstellung des Höhenniveaus des Übergabeabschnitts basierend auf den Werten des Sensors automatisch anzupassen. Dadurch wird ermöglicht, das Höhenniveau des Übergabeabschnitts automatisch auf das sich aufgrund von Temperaturänderungen der Behandlungsvorrichtung ergebende geänderte Übernahmehöhenniveau anzupassen. Mit anderen Worten kann so das Höhenniveaus des Übergabeabschnitts stets automatisch auf das aktuell vorliegende Übernahmehöhenniveau eingestellt werden.

Die oben gestellte Aufgabe wird weiterhin durch eine Abfüllanlage, bevorzugt eine Abfüllanlage zum Befüllen von Dosen, mit den Merkmalen des Anspruchs 9 gelöst. Vorteilhafte Weiterbildungen ergeben sich aus der vorliegenden Beschreibung und den Figuren.

Entsprechend wird eine Abfüllanlage, bevorzugt eine Abfüllanlage zum Befüllen von Dosen, vorgeschlagen umfassend eine Behälterbehandlungsvorrichtung zum Behandeln von Behältern, bevorzugt eine Füllvorrichtung zum Befüllen von Dosen. Die Abfüllanlage kennzeichnet sich ferner durch eine Vorrichtung zum Zuführen von Behältern an die Behälterbehandlungsvorrichtung gemäß einem der vorstehenden Ausführungsformen.

Durch das Vorsehen der Vorrichtung in der Abfüllanlage können die oben hinsichtlich der Vorrichtung beschriebenen Vorteile und Wirkungen durch die Abfüllanlage analog erzielt werden.

### Kurze Beschreibung der Figuren

Bevorzugte weitere Ausführungsformen der Erfindung werden durch die nachfolgende Beschreibung der Figuren näher erläutert. Dabei zeigen:
- Figur 1: schematisch eine Draufsicht einer Abfüllanlage zum Befüllen von Behältern gemäß einer ersten Ausführungsform;
- Figur 2: schematisch eine Seitenansicht der Abfüllanlage aus Figur 1;
- Figur 3: schematisch eine weitere Seitenansicht der Abfüllanlage aus Figur 1;
- Figur 4: schematisch eine weitere Seitenansicht der Abfüllanlage aus Figur 1;
- Figur 5: schematisch eine perspektivische Seitenansicht einer Vorrichtung zum Zuführen von Behältern zu einer Behälterfüllvorrichtung der Abfüllanlage aus Figur 1; und
- Figur 6: schematisch eine Seitenansicht einer Abfüllanlage gemäß einer weiteren Ausführungsform.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen versehen, und auf eine wiederholte Beschreibung dieser Elemente wird teilweise verzichtet, um Redundanzen zu vermeiden.

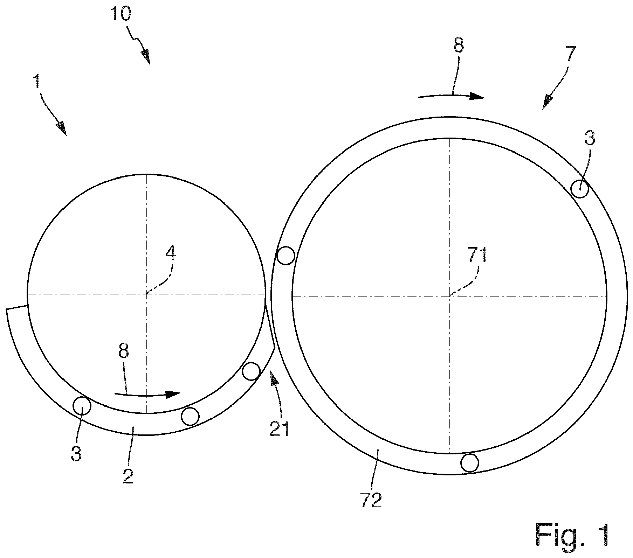

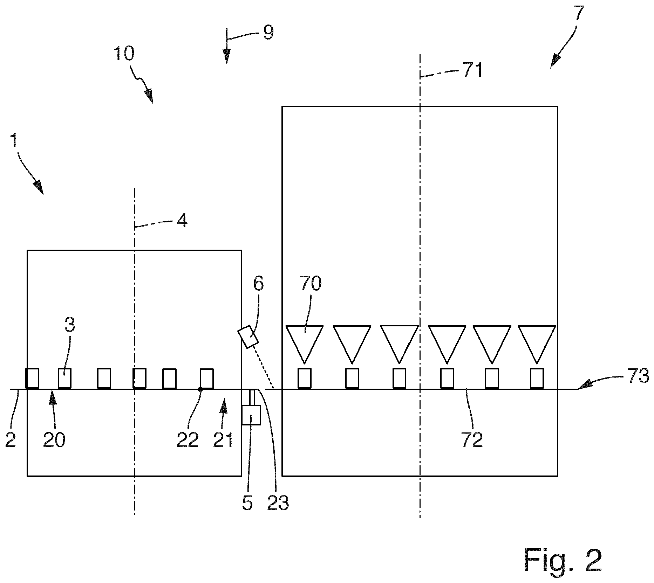

In Figur 1 ist schematisch eine Draufsicht einer Abfüllanlage 10 zum Befüllen von Behältern 3 gemäß einer ersten Ausführungsform gezeigt. Die Abfüllanlage 10 ist vorliegend zum Befüllen von Behältern 3 in Form von Dosen mit einem flüssigen Füllprodukt ausgebildet. Sie umfasst eine Behälterbehandlungsvorrichtung in Form einer Behälterfüllvorrichtung 7 in Rundläufer-Bauweise. Die Behälterfüllvorrichtung 7 ist um eine zentrale Rotationsachse 71 rotierbar, wobei zu befüllende Behälter 3 an einem Übernahmebereich zum Übernehmen zu befüllenden Behälter 3 von der Behälterfüllvorrichtung 7 übernommen werden, entlang einer außen in Umfangsrichtung der Behälterfüllvorrichtung 7 angeordneten Behälterführung 72 geführt werden und dabei via am Umfang der Behälterfüllvorrichtung 7 angeordneter Füllorgane 70 (siehe Figur 2) befüllt werden. Anschließend werden die befüllten Behälter 3 in einem Ausschleusbereich an einen Auslaufstern (nicht gezeigt) übergeben.

Zum Zuführen der zu befüllenden Behälter 3 zu der Behälterfüllvorrichtung 7 ist eine Vorrichtung 1 zum Zuführen von Behältern 3 zu der Behälterfüllvorrichtung 7 vorgesehen. Die Vorrichtung 1 umfasst eine Führung 2, welche zum Führen der Behälter 3 an deren Behälterboden ausgebildet ist. Die Führung 2 weist einen Übergabeabschnitt 21 zum Übergeben eines Behälters 3 an die Behälterfüllvorrichtung 7 auf. Die Behälterfüllvorrichtung 7 weist hierzu eine nicht gezeigte Übernahmevorrichtung auf, welche die der Behälterfüllvorrichtung 7 via des Übergabeabschnitts 21 zugeführten Behälter 3 übernimmt und auf die Behälterführung 72 überführt.

Die Vorrichtung 1 ist vorliegend als Zulaufstern in Rundläufer-Bauweise ausgebildet.

Alternativ oder zusätzlich kann auch der Auslaufstern analog zur Vorrichtung 1 ausgebildet sein. Der Übergabeabschnitt des Auslaufsterns ist dann zum Übernehmen der befüllten Behälter von der Behälterfüllvorrichtung ausgebildet. Entsprechend ist das Ende des Übergabebereichs an der Behälterführung 72 angeordnet und höhenverstellbar ausgebildet, so dass das Höhenniveau des Endes auf das Übernahmehöhenniveau 73 anpassbar ist.

Figur 2 zeigt schematisch eine Seitenansicht der Abfüllanlage 10 aus Figur 1. Deutlich zu erkennen ist hier, dass die Führung 2 in Bezug auf die Gravitationsrichtung 9 auf einem vorgegebenen Führungshöhenniveau 20 angeordnet ist. Ebenso ist die Behälterführung 72 der Behälterfüllvorrichtung 7 auf einem vorgegebenen Übernahmehöhenniveau 73 angeordnet. Um einen besonders schonenden Übergang der Behälter 3 von der Vorrichtung 1 zur Behälterfüllvorrichtung 7 zu gewährleisten, sind die Behälterführung 72 der Behälterfüllvorrichtung 7 und die Führung 2 der Vorrichtung 1 auf dem gleichen Höhenniveau angeordnet. Mit anderen Worten entspricht das Führungshöhenniveau 20 dem Übernahmehöhenniveau 73.

Oberhalb der Behälterführung 72 ist die Vielzahl von Füllorganen 70 zum Befüllen jeweils eines Behälters 3 angeordnet.

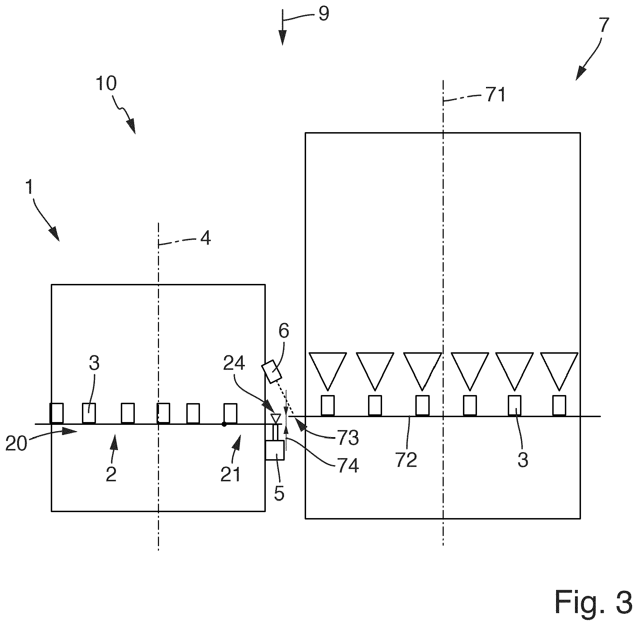

Figur 3 zeigt schematisch eine weitere Seitenansicht der Abfüllanlage 10 aus Figur 1, bei welcher die Behälterfüllvorrichtung 7 im Vergleich zu Figur 2 aufgrund einer während des Betriebs der Behälterfüllvorrichtung 7 entstehenden Temperaturentwicklung eine Wärmedehnung erfahren hat.

Die Wärmedehnung bewirkt unter anderem, dass das Übernahmehöhenniveau 73 im Vergleich zu Figur 2 bei erwärmter Behälterfüllvorrichtung 7 wie in Figur 3 gezeigt höher ist. Durch diese Wärmedehnung und die dadurch resultierende Verschiebung des Übernahmehöhenniveaus 73 entgegen der Gravitationsrichtung 9 entsteht zwischen dem im Wesentlichen gleich bleibenden Führungshöhenniveau 20 der Führung 2 und dem Übernahmehöhenniveau 73 ein Höhenversatz 74.

Zum Ausgleich dieses durch die Wärmedehnung der Behälterfüllvorrichtung 7 entstehenden Höhenversatzes 74 ist der Übergabeabschnitt 21 höhenverstellbar ausgebildet.

Die Vorrichtung 1 weist einen Sensor 6 zum Erfassen des aktuell vorliegenden Übernahmehöhenniveaus 73 der die Behälter 3 übernehmende Führung 72 der Behälterfüllvorrichtung 7 auf, welcher vorliegend ein optisch messender Sensor 6 ist.

Alternativ kann der Sensor 6 auch ein mechanisch abtastender Sensor und/oder ein thermischer Sensor sein.

Ferner weist die Vorrichtung 1 eine unterhalb des Übergabeabschnitts 21 angeordnete Einstellvorrichtung 5 auf, mit welcher der Sensor 6 kommuniziert. Die Einstellvorrichtung 5 ist dazu eingerichtet, basierend auf einem via des Sensors 6 erfassten Wertes das Höhenniveau des Übergabeabschnitts 21 einzustellen, vorliegend derart, dass das Höhenniveau des Übergabeabschnitts 21 dem aktuell ermittelten Übernahmehöhenniveau 73 entspricht.

Alternativ oder zusätzlich kann die Einstellvorrichtung 5 dazu eingerichtet sein, eine zeitabhängige Anpassung des Höhenniveaus des Übergabeabschnitts 21 durchzuführen. Bevorzugt erfolgt diese Anpassung nach einer eingangs erfolgten Temperaturermittlung, bei welcher bei Beginn des Betriebs der Anlage 10 zumindest eingangs einmalig die aktuelle Temperatur der Behälterfüllvorrichtung 7 ermittelt wird.

Die Temperatur kann beispielsweise auch über eine Messung der Temperatur eines Ölbads gemessen werden.

Ausgehend von der Temperatur kann auch über eine Zeitvorgabe eine Anpassung des Höhenniveaus des Übergabeabschnitts 21 durchgeführt werden. Mit anderen Worten wird ausgehend von einer Ausgangstemperatur die zeitliche Entwicklung der Temperatur geschätzt, so dass dann allein über den Zeitablauf die anzupassende Änderung des Höhenniveaus bestimmt werden kann.

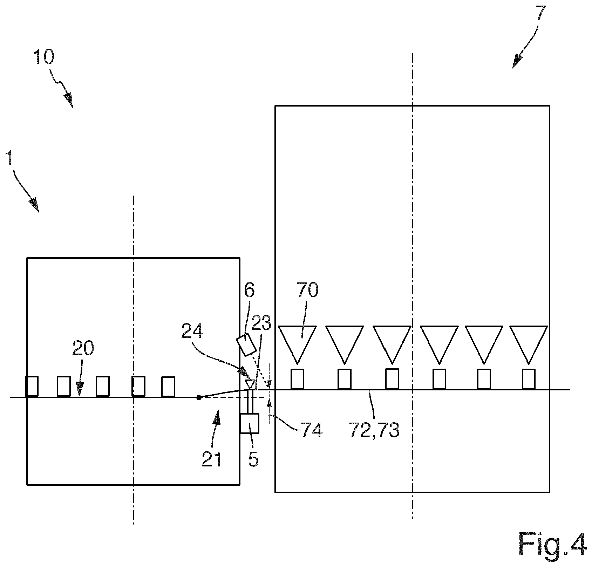

Figur 4 zeigt schematisch eine weitere Seitenansicht der Abfüllanlage 10 aus Figur 1, bei welcher im Vergleich zu Figur 3 das Höhenniveau 24 des Übergabeabschnitts 21 durch die Einstellvorrichtung 5 derart verändert ist, dass das Höhenniveau 24 dem Übernahmehöhenniveau 73 entspricht. Die Einstellvorrichtung 5 hat hierfür einen Hub erzeugt, welcher das Ende 23 des Übergabeabschnitts 21 vom Führungshöhenniveau 20 auf das aktuelle Übernahmehöhenniveau 73 angehoben hat.

Der Sensor 6 ist vorliegend dazu eingerichtet, in kontinuierlichen zeitlichen Abständen jeweils einen Wert zu erfassen und diesen der Einstellvorrichtung 5 zu übermitteln. Die Einstellvorrichtung 5 ist ferner dazu eingerichtet, basierend auf den kontinuierlich übermittelten Werten des Sensors 6 das Höhenniveau 24 des Übergabeabschnitts 21 automatisch auf den jeweils zuletzt ermittelten Wert des Übernahmehöhenniveaus 73 anzupassen.

Der Übergabeabschnitt 21 ist derart ausgebildet, dass bei Einstellung des Übergabeabschnitts 21 auf ein von dem Führungshöhenniveau 20 abweichendes Höhenniveau 24 sich der Übergabeabschnitt 21 in Transportrichtung 8 (siehe Figur 1) gesehen von dem Führungshöhenniveau 20 stetig auf das eingestellte Höhenniveau 24 des Übergabeabschnitts 21 verändert. Mit anderen Worten weist der Anfang 22 des Übergabeabschnitts 21 in Transportrichtung 8 gesehen stets das Führungshöhenniveau 20 und das Ende 23 das eingestellte Höhenniveau 24 auf. Der Bereich zwischen dem Anfang 22 und dem Ende 23 verändert sich dabei vom Führungshöhenniveau 20 stetig auf das eingestellte Höhenniveau 24.

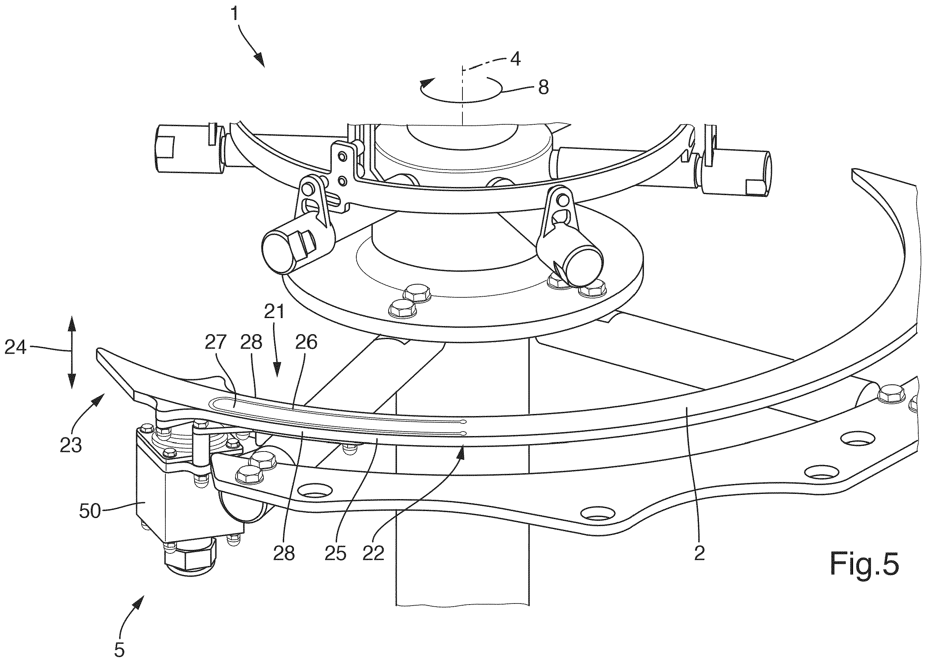

Figur 5 zeigt schematisch eine perspektivische Seitenansicht der Vorrichtung 1 zum Zuführen von Behältern 3 zu der Behälterfüllvorrichtung 7 der Abfüllanlage 10 aus Figur 1. Die Führung 2 ist in Form eines horizontal orientierten Führungsblechs ausgebildet. Der Übergabeabschnitt 21 ist einstückig mit dem Führungsblech ausgebildet, beziehungsweise aus dem Führungsblech ausgeformt.

Hierzu weist das Führungsblech eine längliche, U-förmige Ausnehmung 26 auf, welche sich derart entlang der Transportrichtung 8 erstreckt, dass das Ende 23 lediglich über zwei im Vergleich zur Dicke des Führungsblechs dünnwandige Stege 28 verbunden ist. Innerhalb der zwei dünnwandigen Stege 28 erstreckt sich das Restmaterial 27, welches durch die Ausnehmung 26 von den dünnen Stegen 28 und dem Ende 23 getrennt beziehungsweise freigeschnitten ist.

Der Übergabeabschnitt 21 ist folglich via der Stege 28 in Form eines Federelements 25 ausgebildet. Aufgrund der Dünnwandigkeit der Stege 28 im Vergleich zur Dicke des Führungsblechs der Führung 2 vor dem Übergabeabschnitt 21 beziehungsweise des Restmaterials 27 ist der Übergabeabschnitt 21 im Vergleich zur restlichen Führung 2 elastisch ausgebildet. Mithin weist der Übergabeabschnitt 21 die Form eines elastischen Federelements 25 auf.

Unterhalb des Endes 23 des Übergabeabschnitts 21 ist die Einstellvorrichtung 5 angeordnet. Sie weist vorliegend einen optionalen Schrittmotor 50 auf, welcher derart orientiert ist, dass ein durch den Schrittmotor 5 generierter Hub eine Änderung des Höhenniveaus 24 des Endes 23 des Übergabeabschnitts 21 bedingt.

Dadurch, dass der Übergabeabschnitt 21 als einstückig mit der Führung 2 ausgebildetes elastisches Federelement 25 ausgebildet ist, kommt es bei einem Anheben oder Absenken des Endes 23 des Übergabeabschnitts 21 auf ein Höhenniveau 24, welches unterschiedlich ist zum Führungshöhenniveau 20 der restlichen Führung 2, zu einer stetigen Veränderung des Höhenniveaus vom Anfang 22 entlang der Transportrichtung 8 bis zum Ende 23, indem sich das Federelement 25 elastisch verformt.

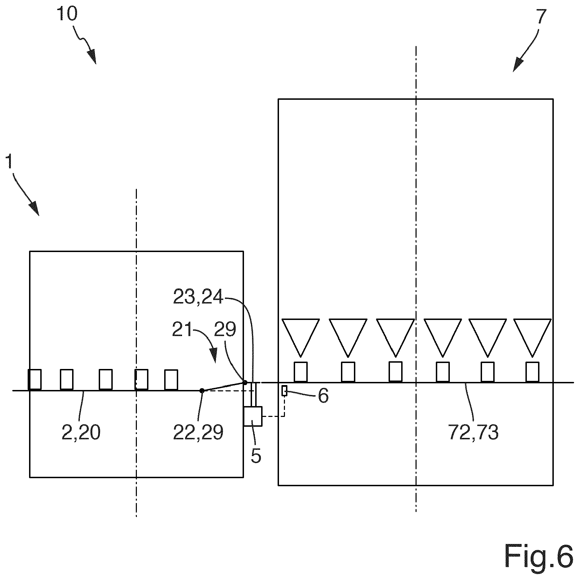

In Figur 6 ist schematisch eine Seitenansicht einer Abfüllanlage 10 gemäß einer weiteren Ausführungsform gezeigt. Die Abfüllanlage 10 entspricht im Wesentlichen jener der Figuren 1 bis 4, wobei die Vorrichtung 1 anstelle des optischen Sensors einen Temperatursensor 6 aufweist, welcher mit der Einstellvorrichtung 5 verbunden ist. Die Einstellvorrichtung 5 beziehungsweise eine Steuerung/Regelung (nicht gezeigt) der Einstellvorrichtung 5 ermittelt basierend auf der durch den Sensor 6 gemessenen Temperatur das aktuelle Übernahmehöhenniveau 73 der Behälterführung 72 der Behälterfüllvorrichtung 7 und stellt das Ende 23 des Übergabeabschnitts 21 auf dieses Höhenniveau 24 ein.

Im Unterschied zu der Ausführungsform des Übergabeabschnitts 21 gemäß der Figuren 1 bis 5 weist der Übergabeabschnitt 21 gemäß Figur 6 am Anfang 22 und im Bereich des Endes 23 jeweils ein Gelenk 29 auf. Mit anderen Worten ist die Führung 2 und das Ende 23 über einen sich zwischen dem Anfang 22 und dem Ende 23 erstreckenden Rampenabschnitt verbunden.

### Bezuqszeichenliste

- 1: Vorrichtung

- 2: Führung
- 20: Führungshöhenniveau
- 21: Übergabeabschnitt
- 22: Anfang
- 23: Ende
- 24: Höhenniveau
- 25: Federelement
- 26: Ausnehmung
- 27: Restmaterial

- 3: Behälter
- 4: Rotationsachse

- 5: Einstellvorrichtung
- 50: Schrittmotor

- 6: Sensor

- 7: Behälterfüllvorrichtung
- 70: Füllorgan
- 71: Rotationsachse
- 72: Behälterführung
- 73: Übernahmehöhenniveau
- 74: Höhenversatz

- 8: Transportrichtung
- 9: Gravitationsrichtung
- 10: Abfüllanlage

## Patentansprüche

1. Vorrichtung (1) zum Zuführen von Behältern (3) zu einer
Behälterbehandlungsvorrichtung, bevorzugt zu einer Behälterfüllvorrichtung (7) zum Befüllen von Behältern (3) mit einem flüssigen Füllprodukt, umfassend eine auf einem vorgegebenen Führungshöhenniveau (20) angeordnete Führung (2) zum Führen eines Behälters (3) an seinem Behälterboden, wobei die Führung (2) einen Übergabeabschnitt (21) zum Übergeben des Behälters (3) an eine Übernahmevorrichtung der Behälterbehandlungsvorrichtung (7) aufweist, wobei der Übergabeabschnitt (21) höhenverstellbar ist,
**dadurch gekennzeichnet, dass**
ein Sensor (6) zum Erfassen eines Übernahmehöhenniveaus (73) einer die Behälter übernehmenden Behälterführung (72) der Behälterbehandlungsmaschine (7) vorgesehen ist.

2. Vorrichtung (1) gemäß Anspruch 1, **dadurch gekennzeichnet, dass** der Übergabeabschnitt (21) derart ausgebildet ist, dass bei Einstellung des Übergabeabschnitts (21) auf ein von dem Führungshöhenniveau (20) abweichendes Höhenniveau (24) sich der Übergabeabschnitt (21) in Transportrichtung (8) gesehen von dem Führungshöhenniveau (20) stetig auf das eingestellte Höhenniveau (24) des Übergabeabschnitts (21) verändert.

3. Vorrichtung (1) gemäß Anspruch 1 oder 2, **dadurch gekennzeichnet, dass** der Übergabeabschnitt (21) elastisch ausgebildet ist, wobei der Übergabeabschnitt (21) bevorzugt in Form eines elastischen Federelements (25), besonders bevorzugt eines elastischen Federblechs, ausgebildet ist, und/oder der Übergabeabschnitt (21) eine Ausnehmung (26), bevorzugt eine längliche, sich in Transportrichtung erstreckende Ausnehmung (26) zum Ausbilden des elastischen Federelements (25) aufweist, wobei die Ausnehmung (26) bevorzugt U-förmig ausgebildet ist.

4. Vorrichtung (1) gemäß einem der vorstehenden Ansprüche, **dadurch gekennzeichnet, dass** eine Einstellvorrichtung (5), bevorzugt umfassend einen Hubantrieb, bevorzugt einen Stellmotor oder Schrittmotor (50), zum Einstellen des Höhenniveaus (24) des Übergabeabschnitts (21) vorgesehen ist, wobei die Einstellvorrichtung (5) bevorzugt unterhalb des Übergabeabschnitts (21) angeordnet ist.

5. Vorrichtung (1) gemäß Anspruch 4, **dadurch gekennzeichnet, dass** der Sensor (6) mit der Einstellvorrichtung (5) verbunden ist, wobei die Einstellvorrichtung (5) bevorzugt basierend auf einem via des Sensors (6) erfassten Wertes das Höhenniveau (24) des Übergabeabschnitts (21) einstellt, bevorzugt derart, dass das Höhenniveau (24) im Wesentlichen dem Übernahmehöhenniveau (73) entspricht.

6. Vorrichtung (1) gemäß Anspruch 4 oder 5, **dadurch gekennzeichnet, dass** der Sensor (6) ein optisch messender Sensor (6), ein mechanisch abtastender Sensor (6) und/oder ein thermischer Sensor (6) ist, wobei die Einstellvorrichtung (5) bevorzugt eine Steuerung/Regelung aufweist, welche einen Vorgabewert für das Höhenniveau (24) des Übergabeabschnitts (21) basierend auf einem Eingangssignal des Sensors (6) ermittelt.

7. Vorrichtung (1) gemäß einem der Ansprüche 4 bis 6, **dadurch gekennzeichnet, dass** der Sensor (6) dazu eingerichtet ist, kontinuierlich Werte zu erfassen, bevorzugt in regelmäßigen Zeitintervallen, und die Einstellvorrichtung (5) dazu eingerichtet ist, die Einstellung des Höhenniveaus (24) des Übergabeabschnitts (21) basierend auf den Werten des Sensors (6) automatisch anzupassen.

8. Vorrichtung (1) gemäß einem der Ansprüche 4 bis 7, **dadurch gekennzeichnet, dass** der Sensor (6) ein thermischer Sensor ist, wobei die Einstellvorrichtung (5) bevorzugt eine Steuerung/Regelung aufweist, welche einen Vorgabewert für das Höhenniveau (24) des Übergabeabschnitts (21) basierend auf einem Eingangssignal des Sensors (6) ermittelt und dann gemäß einer Zeitvorgabe kontinuierlich anpasst.

9. Abfüllanlage (10), bevorzugt Abfüllanlage (10) zum Befüllen von Dosen, umfassend eine Behälterbehandlungsvorrichtung (7) zum Behandeln von Behältern (3), bevorzugt zum Befüllen von Dosen,
**gekennzeichnet durch**
eine Vorrichtung (1) zum Zuführen von Behältern (3) an die Behälterbehandlungsvorrichtung (7) gemäß einem der vorstehenden Ansprüche.

## Claims

1. Device (1) for supplying containers (3) to a container treatment device, preferably to a container filling device (7) for filling containers (3) with a liquid filling product, comprising a guide (2) arranged on a predetermined guiding height level (20) for guiding a container (3) at its container base, wherein the guide (2) has a transfer portion (21) for transferring the container (3) to an acquisition device of the container treatment device (7), wherein the transfer portion (21) is height adjustable,
**characterised in that**
a sensor (6) is provided for detecting an acquisition height level (73) of a container guide (72) of the container treatment machine (7) which is acquiring the containers.

2. Device (1) according to claim 1, **characterised in that** the transfer portion (21) is configured such that when adjusting the transfer portion (21) to a height level (24) which differs from the guiding height level (20), the transfer portion (21), viewed in transport direction (8) alters continuously from the guiding height level (20) to the adjusted height level (24) of the transfer portion (21).

3. Device (1) according to claim 1 or 2, **characterised in that** the transfer portion (21) is elastic in design, wherein the transfer portion (21) is designed preferably in the form of an elastic spring element (25), most preferably an elastic spring plate, and/or the transfer portion (21) has a cutout (26), preferably an elongated cutout (26) extending in transport direction for forming the elastic spring element (25), wherein the cutout (26) is preferably U-shaped.

4. Device (1) according to any of the preceding claims **characterised in that** an adjusting device (5), preferably comprising a lift drive, preferably a servomotor or stepper motor (50), is provided for adjusting the height level (24) of the transfer portion (21), wherein the adjusting device (5) is preferably arranged below the transfer portion (21).

5. Device (1) according to claim 4, **characterised in that** the sensor (6) is connected to the adjusting device (5), wherein the adjusting device (5) preferably adjusts the height level (24) of the transfer portion (21) based on a value recorded by the sensor (6), preferably such that the height level (24) is substantially equal to the acquisition height level (73).

6. Device (1) according to claim 4 or 5, **characterised in that** the sensor (6) is an optically measuring sensor (6), a mechanically scanning sensor (6) and/or a thermal sensor (6), wherein the adjusting device (5) preferably has a controller/regulator which determines a default value for the height level (24) of the transfer portion (21) on the basis of an input signal of the sensor (6).

7. Device (1) according to any of claims 4 to 6, **characterised in that** the sensor (6) is configured to detect values continuously, preferably at regular time intervals, and the adjusting device (5) is configured to adapt automatically the adjustment of the height level (24) of the transfer portion (21) based on the values of the sensor (6).

8. Device (1) according to any of claims 4 to 7, **characterised in that** the sensor (6) is a thermal sensor, wherein the adjusting device (5) preferably has a controller/regulator which determines a default value for the height level (24) of the transfer portion (21) based on an input signal of the sensor (6) and then adapted continuously according to a time specification.

9. Filling system (10), preferably filling system (10) for filling cans, comprising a container treatment device (7) for treating containers (3), preferably for filling cans,
**characterised by**
a device (1) for supplying containers (3) to the container treatment device (7) according to any of the preceding claims.

## Revendications

1. Dispositif (1) d'amenée de récipients (3) vers un dispositif de traitement de récipients, de préférence vers un dispositif de remplissage de récipients (7) pour le remplissage de récipients (3) avec un produit de remplissage liquide, comprenant un guide (2) disposé à un niveau de hauteur de guidage (20) déterminé en vue du guidage d'un récipient (3) au niveau de son fond de récipient, le guide (2) présentant une section de transfert (21) pour transférer le récipient (3) à un dispositif de réception du dispositif de traitement de récipients (7), dans lequel la section de transfert (21) est réglable en hauteur,
**caractérisé en ce que**
un capteur (6) pour la détection d'un niveau de hauteur de réception (73) d'un guide de récipient (72) recevant les récipients de la machine de traitement des récipients (7) est prévu.

2. Dispositif (1) selon la revendication 1, **caractérisé en ce que** la section de transfert (21) est conçue de telle sorte que lors de l'ajustage de la section de transfert (21) à un niveau de hauteur (24) divergent du niveau de hauteur de guidage (20), la section de transfert (21), vue dans le sens de transport (8), varie constamment du niveau de hauteur de guidage (20) au niveau de hauteur ajusté (24) de la section de transfert (21).

3. Dispositif (1) selon la revendication 1 ou 2, **caractérisé en ce que** la section de transfert (21) est conçue de manière élastique, dans lequel la section de transfert (21) est conçue de préférence sous forme d'un élément de suspension élastique (25), le plus préférentiellement sous forme d'une tôle souple élastique, et/ou la section de transfert (21) comprend un évidement (26), de préférence un évidement oblong (26) s'étendant dans le sens de transport pour la formation de l'élément de suspension élastique (25), dans lequel l'évidement (26) est conçu de préférence en forme de U.

4. Dispositif (1) selon l'une quelconque des revendications précédentes, **caractérisé en ce qu'un** dispositif de réglage (5) comprenant de préférence une commande de montée, de préférence un servomoteur ou un moteur pas à pas (50) pour régler le niveau de hauteur (24) de la section de transfert (21) est prévu, dans lequel le dispositif de réglage (5) est de préférence disposé en dessous de la section de transfert (21).

5. Dispositif (1) selon la revendication 4, **caractérisé en ce que** le capteur (6) est relié au dispositif de réglage (5), dans lequel le dispositif de réglage (5) ajuste, de préférence sur la base d'une valeur détectée par l'intermédiaire du capteur (6), le niveau de hauteur (24) de la section de transfert (21), de préférence de sorte que le niveau de hauteur (24) correspond essentiellement au niveau de hauteur de réception (73).

6. Dispositif (1) selon la revendication 4 ou 5, **caractérisé en ce que** le capteur (6) est un capteur (6) de mesure optique, un capteur (6) de balayage mécanique et/ou un capteur thermique (6), dans lequel le dispositif de réglage (5) comprend de préférence une commande/régulation, qui détermine une valeur de spécification pour le niveau de hauteur (24) de la section de transfert (21) sur la base d'un signal d'entrée du capteur (6).

7. Dispositif (1) selon l'une des revendication 4 à 6, **caractérisé en ce que** le capteur (6) est monté pour détecter des valeurs en continu, de préférence à des intervalles de temps réguliers, et le dispositif de réglage (5) est monté pour adapter automatiquement le réglage du niveau de hauteur (24) de la section de transfert (21) sur la base des valeurs du capteur (6).

8. Dispositif (1) selon l'une des revendication 4 à 7, **caractérisé en ce que** le capteur (6) est un capteur thermique, dans lequel le dispositif de réglage (5) comporte de préférence une commande/régulation qui détermine une valeur de consigne pour le niveau de hauteur (24) de la section de transfert (21) sur la base d'un signal d'entrée du capteur (6) et l'adapte ensuite en continu conformément à une temporisation.

9. Installation de remplissage (10), de préférence installation de remplissage (10) pour le remplissage de boîtes, comprenant un dispositif de traitement de récipients (7) pour le traitement de récipients (3), de préférence pour le remplissage de boîtes,
**caractérisé par**
un dispositif (1) d'amenée de récipients (3) au dispositif de traitement de récipients (7) selon l'une des revendications précédentes.
